# EUROPEAN PATENT APPLICATION

(11) **EP 4 835 871 A1**
(43) Date of publication of application: **04.11.2026**
(21) Application number: 26171289.7
(22) Date of filing: 08.04.2026
(51) Int. Cl.: G09G 3/20, G06F 3/041

(54) **SIGNAL CONTROL CIRCUIT FOR TOUCH AND DISPLAY DRIVER INTEGRATION CIRCUIT AND TOUCH DISPLAY SYSTEM**

(30) Priority: 02.05.2025 US 202519196754
(71) Applicant: Himax Technologies Limited, Tainan City 744092 (TW)
(72) Inventor: HE, Jia-Ming, 744092 TAINAN CITY (TW); CHIANG, Cheng-Ting, 744092 TAINAN CITY (TW)
(74) Representative: Cabinet Beaumont

(57) **Abstract**

A signal control circuit applicable to TDDI circuits is provided. The signal control circuit includes a voltage converter, first and second capacitors, first and second switching circuits. The first capacitor is coupled between second gate high voltage and first node. The second capacitor is coupled between second gate low voltage and second node. The first switching circuit selects whether to transmit reference voltage to the second node and whether to couple the first node to the ground. The second switching circuit selects whether to transmit time varying signal to first node and second node. During touch sensing period, the first switching circuit is closed at first time point, the second switching circuit routes the time varying signal to the first node at second time point and routes the time varying signal to the second node at third time point where the time varying signal changes to low logic level.

## Description

### BACKGROUND

### Technical field

The disclosure relates to a signal control circuit for the touch display field, and more particularly, to a signal control circuit applicable to a touch and display driver integration (TDDI) circuit.

### Description of Related Art

In conventional touch and display driver integration (TDDI) circuits, touch and display driving functionalities are consolidated within a single integrated circuit. The display driver is required to generate various driving voltages, such as VGH, VGL, VGHO, and VGLO, to drive the display panel during display driving period. During touch sensing period, the TDDI circuit must additionally generate coupling signals that may overlap with the aforementioned driving signals to mitigate panel loading effects. However, such signal overlapping may result in instantaneous voltage levels that exceed the allowable voltage stress of circuit components.

### SUMMARY

A signal control circuit applicable to a touch and display driver integration (TDDI) circuit is provided. The signal control circuit includes a voltage converter, a first capacitor, a second capacitor, a first switching circuit, and a second switching circuit. The voltage converter is configured to generate a second gate high voltage based on a first gate high voltage and generate a second gate low voltage based on a first gate low voltage. The first capacitor is coupled between the second gate high voltage and a first node. The second capacitor is coupled between the second gate low voltage and a second node. The first switching circuit is coupled to the first node and the second node and configured to select whether to transmit a reference voltage to the second node, and to select whether to couple the first node to a ground. The second switching circuit coupled to the first node and the second node and configured to select whether to transmit a time varying signal to the first node and the second node, in which the time varying signal is a periodic signal with a low logic level and a high logic level. During a touch sensing period, the first switching circuit closes a path coupling the first node to the ground and closes a path coupling the second node to the reference voltage at a first time point, the second switching circuit routes the time varying signal to the first node at a second time point and routes the time varying signal to the second node at a third time point where the time varying signal changes to the low logic level.

According to one embodiment of the present disclosure, the first switching circuit includes a first switch and a second switch. The first switch is coupled between the first node and the ground. The second switch is coupled between the second node and the reference voltage.

According to one embodiment of the present disclosure, the second switching circuit includes a third switch and a fourth switch. The third switch is coupled between the first node and the time varying signal. The fourth switch is coupled between the second node and the time varying signal.

According to one embodiment of the present disclosure, during a display driving period, the first switch and the second switch are turned on, while the third switch and the fourth switch are turned off; and during the touch sensing period, the first switch and the second switch are turned off at the first time point, the third switch is turned on at the second time point and the fourth switch is turned on at the third time point.

According to one embodiment of the present disclosure, the first switching circuit further includes a fifth switch. The fifth switch is coupled between the second node and the ground.

According to one embodiment of the present disclosure, during a display driving period, the first switch and the fifth switch are turned on, while the second switch, the third switch and the fourth switch are turned off; and during the touch sensing period, the first switch and the fifth switch are turned off at the first time point, the third switch is turned on at the second time point, the fourth switch is turned on at the third time point, and the second switch is turned on for a predetermined time before the third switch is turned on.

According to one embodiment of the present disclosure, the third switch is turned off at a fourth time point and the fourth switch is turned off at a fifth time point in response to the touch sensing period being switched to the display driving period.

According to one embodiment of the present disclosure, the signal control circuit further includes a third capacitor and a fourth capacitor. The third capacitor is coupled between the first gate high voltage and the ground. The fourth capacitor is coupled between the first gate low voltage and the ground.

According to one embodiment of the present disclosure, the signal control circuit further includes a third capacitor and a fourth capacitor. The third capacitor is coupled between the first gate high voltage and the first node. The fourth capacitor is coupled between the first gate low voltage and the second node.

According to one embodiment of the present disclosure, the signal control circuit further includes a sixth switch. The sixth switch is coupled between the first gate high voltage and an external gate high voltage.

According to one embodiment of the present disclosure, the sixth switch is a P-type MOSFET.

According to one embodiment of the present disclosure, the signal control circuit further includes a seventh switch. The seventh switch is coupled between the first gate low voltage and an external gate low voltage.

According to one embodiment of the present disclosure, the seventh switch is a N-type MOSFET.

According to one embodiment of the present disclosure, during a display driving period, the first switch, the second switch, the sixth switch and the seventh switch are turned on, while the third switch and the fourth switch are turned off; and during the touch sensing period, the first switch, the second switch, the sixth switch and the seventh switch are turned off at the first time point, the third switch is turned on at the second time point and the fourth switch is turned on at the third time point.

According to one embodiment of the present disclosure, the voltage converter further includes a first voltage regulator and a second voltage regulator. The first voltage regulator is configured to convert the first gate high voltage to the second gate high voltage, in which the second gate high voltage is lower than the first gate high voltage. The second voltage regulator is configured to convert the first gate low voltage to the second gate low voltage, in which the first gate low voltage is lower than the second gate low voltage.

According to one embodiment of the present disclosure, the low logic level of the time varying signal is equal to the reference voltage.

A touch display system is provided. The touch display system includes a touch display panel and a touch and display driver integration (TDDI) circuit. The TDDI circuit is coupled to the touch display panel and includes a voltage converter, a first capacitor, a second capacitor, a first switching circuit, and a second switching circuit. The voltage converter is configured to generate a second gate high voltage based on a first gate high voltage and generate a second gate low voltage based on a first gate low voltage. The first capacitor is coupled between the second gate high voltage and a first node. The second capacitor is coupled between the second gate low voltage and a second node. The first switching circuit is coupled to the first node and the second node and configured to select whether to transmit a reference voltage to the second node, and to select whether to couple the first node to a ground. The second switching circuit coupled to the first node and the second node and configured to select whether to transmit a time varying signal to the first node and the second node, in which the time varying signal is a periodic signal with a low logic level and a high logic level. During a touch sensing period, the first switching circuit closes a path coupling the first node to the ground and closes a path coupling the second node to the reference voltage at a first time point, the second switching circuit routes the time varying signal to the first node at a second time point and routes the time varying signal to the second node at a third time point where the time varying signal changes to the low logic level.

### BRIEF DESCRIPTION OF THE DRAWINGS

FIG. 1 is a schematic diagram showing a touch display panel and a touch and display driver integration (TDDI) circuit in a touch display system in accordance with an embodiment of the present disclosure.
FIG. 2 is a schematic diagram showing a TDDI circuit including a signal control circuit to supply time varying signals to a gate line and a source line in accordance with an embodiment of the present disclosure.
FIG. 3 is a schematic diagram showing a signal control circuit in accordance with an embodiment of the present disclosure.
FIG. 4 is a schematic diagram showing an internal structure of a signal control circuit in accordance with an embodiment of the present disclosure.
FIG. 5 is a schematic diagram showing a signal timing waveform of the signal control circuit in accordance with an embodiment of the present disclosure.
FIG. 6 is a schematic diagram showing an internal structure of a signal control circuit in accordance with an embodiment of the present disclosure.
FIG. 7 is a schematic diagram showing a signal timing waveform of the signal control circuit in accordance with an embodiment of the present disclosure.
FIG. 8 is a schematic diagram showing an internal structure of a signal control circuit in accordance with an embodiment of the present disclosure.
FIG. 9 is a schematic diagram showing a signal timing waveform of the signal control circuit in accordance with an embodiment of the present disclosure.

### DETAILED DESCRIPTION

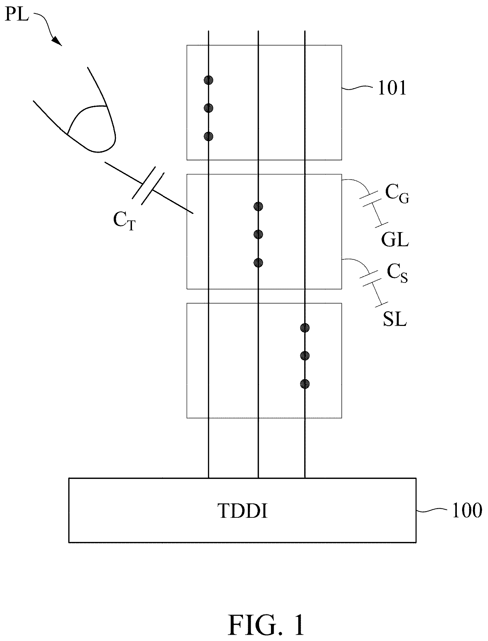

Referring to FIG. 1, FIG. 1 is a schematic diagram showing a touch display panel PL and a touch and display driver integration (TDDI) circuit 100 in a touch display system in accordance with an embodiment of the present disclosure. The touch display system includes the touch display panel PL and the TDDI circuit 100. The touch display panel PL includes multiple gate lines GL, multiple source lines SL, multiple touch sensing lines TL, and multiple touch sensing electrodes 101. For illustration simplicity, only three touch sensing lines TL, three touch sensing electrodes 101, one end of a gate line GL, and one end of a source line SL are shown.

During the display driving period, each touch sensing electrode 101 functions as a common electrode voltage VCOM, serving as a reference potential for display operation. The gate lines GL and source lines SL respectively receive stable driving voltages from the TDDI circuit 100, such as a first gate high voltage VGH, a first gate low voltage VGL, a second gate high voltage VGHO, and a second gate low voltage VGLO.

During the touch sensing period, when a finger or another conductive object approaches or contacts the touch display panel PL, a sensing capacitance C_{T} is formed between the finger and the corresponding touch sensing electrode 101. This change in capacitance alters the electrical characteristics of the associated touch sensing line TL, which is actively monitored by the TDDI circuit 100. By detecting variations in the electrical signals of the touch sensing lines TL, the TDDI circuit 100 can determine the location of the touch based on the corresponding capacitance changes at the touch sensing electrodes 101.

Due to the parasitic capacitance that exists between each gate line GL and source line SL and the signals supplied to the touch sensing electrodes 101, undesired coupling effects may occur. For example, as illustrated in FIG. 1, the gate line GL and the touch sensing electrode 101 form a gate parasitic capacitance C_{G}, and the source line SL and the touch sensing electrode 101 form a source parasitic capacitance C_{S}. These parasitic capacitances C_{G} and C_{S} interfere with the sensing capacitance C_{T}, thereby reducing the signal-to-noise ratio (SNR) of the sensed capacitance value.

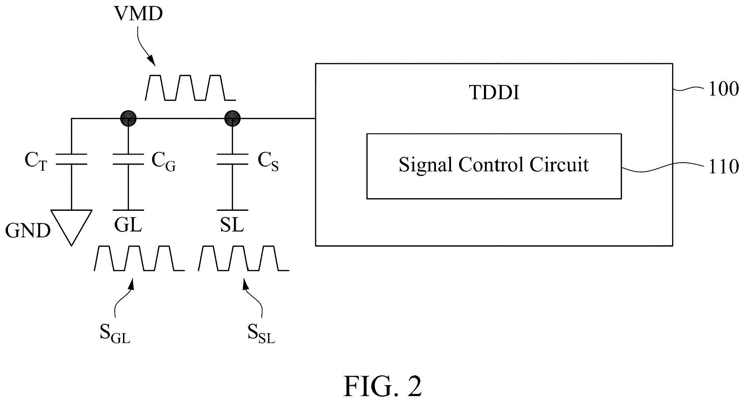

Therefore, as shown in FIG. 2, during the touch sensing period, the TDDI circuit 100 is configured not only to provide a time varying signal VMD to each touch sensing electrode 101 for detecting the sensing capacitance C_{T}, but also to supply a gate driving signal S_{GL} and a source driving signal S_{SL} to the gate line GL and the source line SL, respectively. The gate driving signal S_{GL} and the source driving signal S_{SL} are designed to have waveforms matching that of the time varying signal VMD, such that the voltages on both sides of the parasitic capacitances (C_{G} and C_{S}) vary synchronously. This method effectively cancels out the capacitive loading effect caused by parasitic coupling.

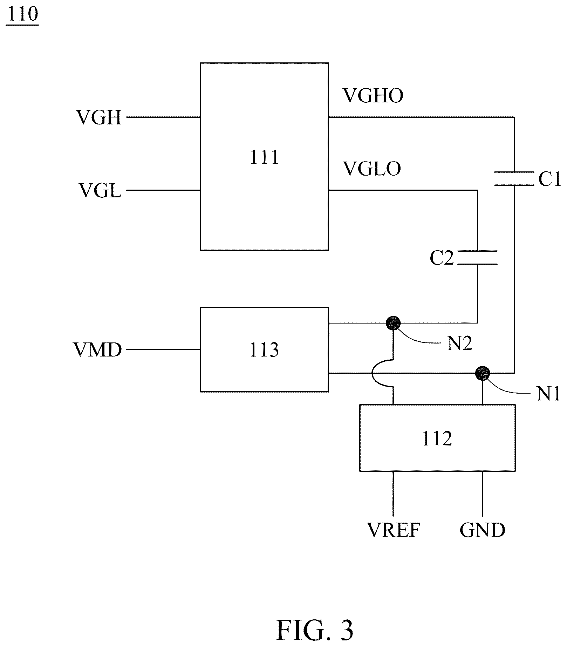

In the embodiment of the present disclosure, the TDDI circuit 100 includes a signal control circuit 110 configured to control the variation and timing of the driving signals S_{GL} and S_{SL}. As shown in FIG. 3, the signal control circuit 110 includes a voltage converter 111, a first capacitor C1, a second capacitor C2, a first switching circuit 112, and a second switching circuit 113.

The voltage converter 111 is configured to generate a second gate high voltage VGHO based on a first gate high voltage VGH, and to generate a second gate low voltage VGLO based on a first gate low voltage VGL. It is worth noting that, regardless of whether the first gate high voltage VGH and the first gate low voltage VGL are generated internally by the TDDI circuit 100 or supplied externally by a power source such as a power management integrated circuit (PMIC), the signal control circuit 110 may ensure that all driving signals during both the display driving period and the touch sensing period remain within voltage stress of the components in the TDDI circuit 100, without requiring any reduction in the operating range of the first gate high voltage VGH and the first gate low voltage VGL during the display driving period.

The first capacitor C1 is coupled between the second gate high voltage VGHO and a first node N1. The second capacitor C2 is coupled between the second gate low voltage VGLO and a second node N2. The first switching circuit 112 is coupled to the first node N1 and the second node N2 and is configured to select whether to transmit a reference voltage VREF to the second node N2, and to select whether to couple the first node N1 to a ground GND. The second switching circuit 113 is coupled to the first node N1 and the second node N2 and is configured to select whether to transmit the time varying signal VMD to the first node N1 and the second node N2.

Specifically, by selecting the conduction paths to the first node N1 and the second node N2 via the first switching circuit 112 and the second switching circuit 113, it can be determined whether the second gate high voltage VGHO and the second gate low voltage VGLO serve as stable driving voltages for display driving, or as driving signals having the same waveform as the time varying signal VMD for touch sensing.

When the touch display panel PL is in the display driving period, the signal control circuit 110 activates the first switching circuit 112 to couple the second node N2 to the reference voltage VREF and couple the first node N1 to the ground GND. At the same time, the signal control circuit 110 deactivates the second switching circuit 113 to disable the conduction path that delivers the time varying signal VMD to the first node N1 and the second node N2.

When the touch display panel PL is in the touch sensing period, the signal control circuit 110 disables the first switching circuit 112 to disconnect the second node N2 from the reference voltage VREF and disconnect the first node N1 from the ground GND. After the first switching circuit 112 is turned off, the signal control circuit 110 then activates the second switching circuit 113, and based on timing control, delivers the time varying signal VMD to the first node N1, the second node N2, or both.

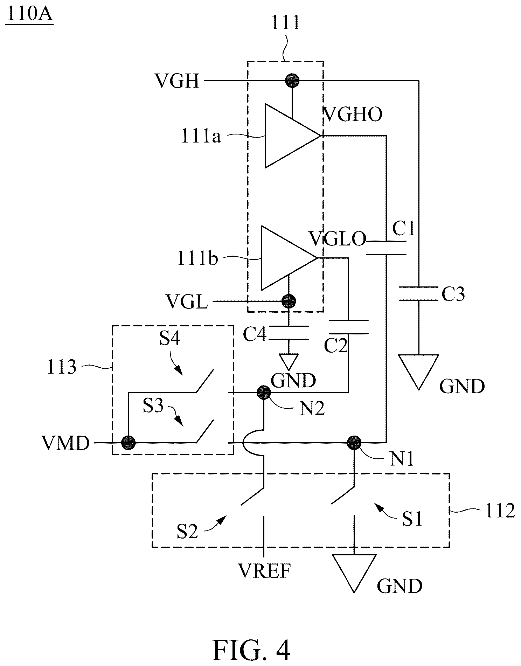

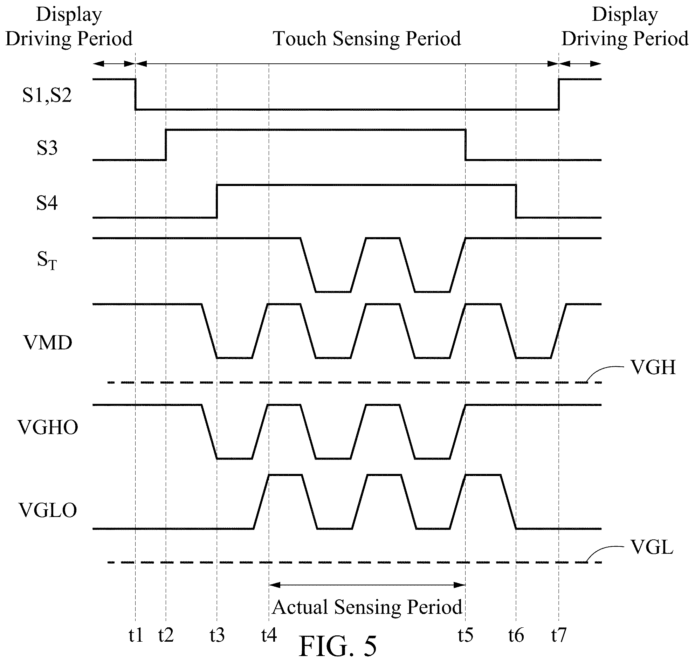

FIG. 4 is a schematic diagram showing an internal structure of a signal control circuit 110A in accordance with an embodiment of the present disclosure. In conjunction with FIG. 5, which shows a signal timing waveform of the signal control circuit 110A, the disclosure may be better understood. The first switching circuit 112 of the signal control circuit 110A includes a first switch S1 and a second switch S2. The second switching circuit 113 includes a third switch S3 and a fourth switch S4. The voltage converter 111 includes a first voltage regulator 111a and a second voltage regulator 111b.

The first switch S1 is coupled between the first node N1 and the ground GND. The second switch S2 is coupled between the second node N2 and the reference voltage VREF. The third switch S3 is coupled between the first node N1 and the time varying signal VMD. The fourth switch S4 is coupled between the second node N2 and the time varying signal VMD. In the embodiment of the present disclose, the time varying signal VMD has a high logic level and a low logic level, and the low logic level of the time varying signal VMD is equal to the reference voltage VREF. This is to ensure that the lower terminal of the second capacitor C2 (i.e., the second node N2) begins to vary from the same value during the touch sensing period as during the display driving period, so that the voltage across the second capacitor C2 does not experience a sudden change when the second switch S2 and the fourth switch S4 are switched.

The first voltage regulator 111a is configured to convert the first gate high voltage VGH into the second gate high voltage VGHO, and the second voltage regulator 111b is configured to convert the first gate low voltage VGL into the second gate low voltage VGLO. The first voltage regulator 111a and the second voltage regulator 111b may, for example, be implemented as low-dropout regulators (LDOs), which are used to slightly step down the first gate high voltage VGH to generate the second gate high voltage VGHO, and to slightly step down the first gate low voltage VGL to generate the second gate low voltage VGLO.

In the example of FIG. 4, the first gate high voltage VGH and the first gate low voltage VGL are respectively coupled to the ground GND through a third capacitor C3 and a fourth capacitor C4. This configuration is adopted because, compared to the first gate high voltage VGH and the first gate low voltage VGL, the second gate high voltage VGHO and the second gate low voltage VGLO are directly applied to the touch display panel PL, and thus have a greater impact on parasitic capacitance. Therefore, in the signal control circuit 110A, same-phase driving control may be performed only for the second gate high voltage VGHO and the second gate low voltage VGLO (i.e., the second gate high voltage VGHO and the second gate low voltage VGLO are controlled to follow a waveform identical to the time varying signal VMD), without additionally applying same-phase driving control to the first gate high voltage VGH and the first gate low voltage VGL.

As shown in FIG. 5, during the display driving period, the first switch S1 and the second switch S2 are turned on, while the third switch S3 and the fourth switch S4 are turned off. The signal control circuit 110A provides stable second gate high voltage VGHO and second gate low voltage VGLO to the touch display panel PL through voltage regulation by the first capacitor C1 and the second capacitor C2.

During the touch sensing period, the first switch S1 and the second switch S2 are turned off at a first time point t1 to end the display driving period. Subsequently, the third switch S3 is turned on at a second time point t2 to charge the first capacitor C1 with the time varying signal VMD, such that the second gate high voltage VGHO follows the waveform of the time varying signal VMD. Then, the fourth switch S4 is turned on at a third time point t3 to charge the second capacitor C2 with the time varying signal VMD, such that the second gate low voltage VGLO also follows the waveform of the time varying signal VMD. Once both second gate high voltage VGHO and second gate low voltage VGLO reliably track the waveform of the time varying signal VMD, the signal control circuit 110A enters an actual touch sensing period.

It is noteworthy that the third switch S3 is turned on prior to the fourth switch S4, such that the first capacitor C1 is charged with the time varying signal VMD, and the second gate high voltage VGHO gradually decreases following the waveform of the time varying signal VMD first. The fourth switch S4 is turned on when the time varying signal VMD reaches the low logic level (the third time point t3). By this mechanism, the second capacitor C2 is charged with the time varying signal VMD starting from a low logic level of the second gate low voltage VGLO and rising upward, rather than starting from a high logic level of the second gate low voltage VGLO and falling. This ensures that the voltage difference between any two of the first gate high voltage VGH, the first gate low voltage VGL, the second gate high voltage VGHO, and the second gate low voltage VGLO does not exceed the voltage stresses during the touch sensing period.

When the touch sensing period is to be ended, an intermediate interval from time point t5 to time point t7 is inserted before re-entering the display driving period. During this interval (t5-t7), the third switch S3 is turned off prior to the fourth switch S4, similar to the switching sequence at the beginning of the touch sensing period. At time point t5, when the second gate high voltage VGHO reaches the high logic level, the third switch S3 is turned off. Subsequently, at time point t6, when the second gate low voltage VGLO reaches the low logic level, the fourth switch S4 is turned off. Thereafter, the signal control circuit 110A re-enters the display driving period at time point t7.

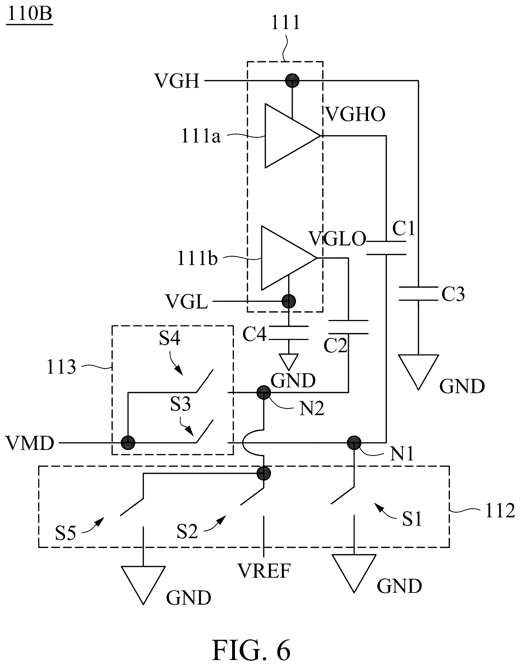

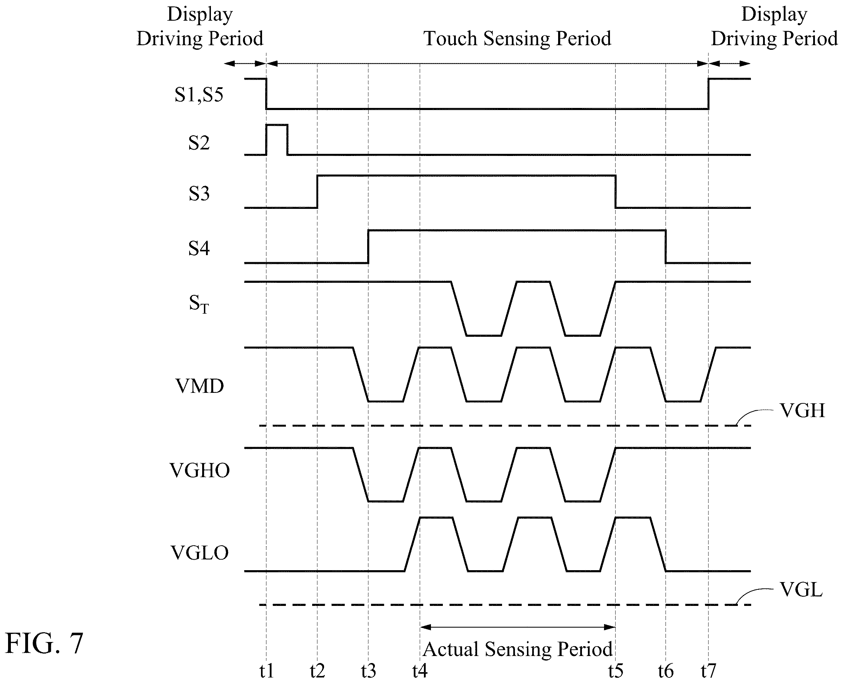

FIG. 6 is a schematic diagram showing an internal structure of a signal control circuit 110B according to one embodiment of the present disclosure. In conjunction with FIG. 7, which shows the timing waveform diagram of the signal control circuit 110B, the present disclosure may be better understood. Compared to the signal control circuit 110A, the first switching circuit 112 of the signal control circuit 110B further includes a fifth switch S5 coupled between the second node N2 and the ground GND.

As shown in FIG. 7, during the display driving period, the first switch S1 and the fifth switch S5 are turned on, while the second switch S2, third switch S3, and fourth switch S4 are turned off. The signal control circuit 110B provides stable second gate high voltage VGHO and second gate low voltage VGLO to the touch display panel PL through voltage regulation by the first capacitor C1 and the second capacitor C2.

During the touch sensing period, the first switch S1 and the fifth switch S5 are turned off at the first time point t1 to end the display driving period. Then, before the third switch S3 is turned on at time point t2, the second switch S2 is turned on for a predetermined duration to write the potential of the second node N2 to the reference voltage VREF. In this way, when the fourth switch S4 is turned on and the second capacitor C2 is charged with the time varying signal VMD, the second gate low voltage VGLO varies based on the reference voltage VREF. Thereafter, the signal control circuit 110B operations from time point t2 to time point t7 are similar to those described in FIG. 5, and the waveform behavior is likewise similar, and thus will not be repeated here.

Specifically, the signal control circuit 110B connects the second node N2 to ground GND through the fifth switch S5 during the display driving period and switches it to the reference voltage VREF through the second switch S2 only when entering the touch sensing period. This allows the second node N2 to avoid staying at the reference voltage VREF during the display driving period, thereby reducing power consumption during the display driving period.

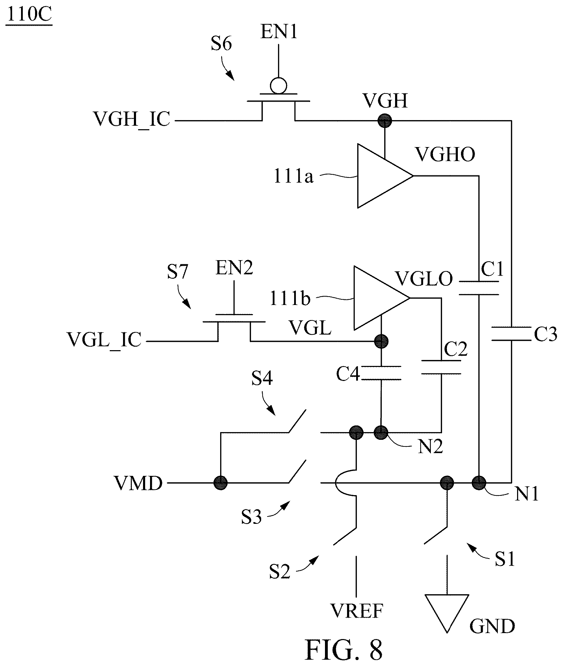

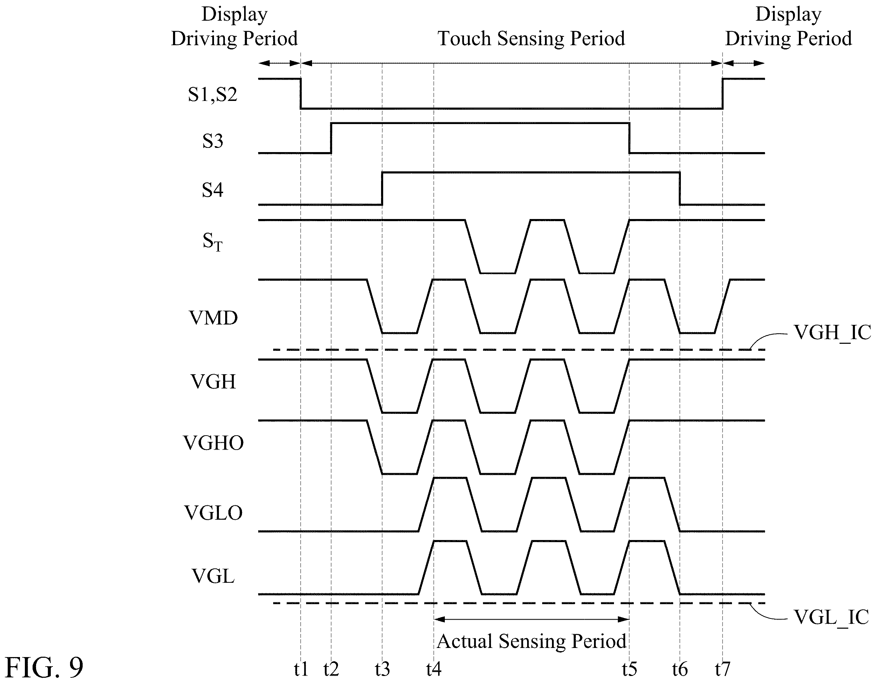

FIG. 8 is a schematic diagram showing an internal structure of a signal control circuit 110C according to one embodiment of the present disclosure. In conjunction with FIG. 9, which shows the timing waveform diagram of the signal control circuit 110C, the present disclosure may be better understood. The difference between the signal control circuit 110C and the signal control circuit 110A lies in that the signal control circuit 110C is applicable in situations where the first gate high voltage VGH and the first gate low voltage VGL are supplied from external power sources, specifically as an external gate high voltage VGH_IC and external gate low voltage VGL_IC, and where it is also desired to perform same-phase driving control on all of the first gate high voltage VGH, the first gate low voltage VGL, the second gate high voltage VGHO, and the second gate low voltage VGLO during the touch sensing period.

In such an embodiment, the transmission path between the external gate high voltage VGH_IC and the first gate high voltage VGH further includes a sixth switch S6, and the transmission path between the external gate low voltage VGL_IC and the first gate low voltage VGL further includes a seventh switch S7. In addition, to achieve same-phase driving control of the first gate high voltage VGH and the first gate low voltage VGL, the third capacitor C3 is coupled between the first gate high voltage VGH and the first node N1, while the fourth capacitor C4 is coupled between the first gate low voltage VGL and the second node N2.

In the embodiments of the present disclosure, the sixth switch S6 on the high voltage path is a P-type MOSFET and the seventh switch S7 on the low voltage path is an N-type MOSFET.

As shown in FIG. 9, during the display driving period, the first switch S1, the second switch S2, the sixth switch S6, and the seventh switch S7 are turned on, while the third switch S3 and the fourth switch S4 are turned off. The conduction of the sixth switch S6 and the seventh switch S7 allows the external gate high voltage VGH_IC and the external gate low voltage VGL_IC to supply the first gate high voltage VGH and the first gate low voltage VGL to the voltage converter 111, and to provide stable second gate high voltage VGHO and second gate low voltage VGLO to the touch display panel PL.

During the touch sensing period, the first switch S1, the second switch S2, the sixth switch S6, and the seventh switch S7 are turned off at the first time point t1, thereby cutting off the supply of the external gate high voltage VGH_IC and the external gate low voltage VGL_IC and ending the display driving period. Subsequently, the third switch S3 is turned on at the second time point t2 to charge the first capacitor C1 and the third capacitor C3 with the time varying signal VMD, so that both the first gate high voltage VGH and the second gate high voltage VGHO follow the waveform of the time varying signal VMD.

Then, the fourth switch S4 is turned on at the third time point t3 to charge the second capacitor C2 and the fourth capacitor C4 with the time varying signal VMD, so that the first gate low voltage VGL and the second gate low voltage VGLO follow the waveform of the time varying signal VMD. Once the first gate high voltage VGH, the first gate low voltage VGL, the second gate high voltage VGHO, and the second gate low voltage VGLO all stably follow the waveform of the time varying signal VMD, the signal control circuit 110B enters the actual touch sensing period.

In this embodiment, the third switch S3 is also turned on and turned off prior to the fourth switch S4, to ensure that the second capacitor C2 and the fourth capacitor C4 are charged from the low logic level of the time varying signal VMD, rather than discharging from the high logic level. This mechanism ensures that the voltage difference between any two of the first gate high voltage VGH, the first gate low voltage VGL, the second gate high voltage VGHO does not exceed the voltage stresses during the touch sensing period, and that it is not necessary to reduce the operating range of the first gate high voltage VGH and the first gate low voltage VGL during the display driving period to comply with the voltage stresses of the components.

In summary, the present disclosure provides a signal control circuit applicable to a touch and display driver integration (TDDI) circuit. By regulating the timing and output mechanism of driving signals, the signal control circuit effectively avoids voltage stress issues caused by signal overlapping. This not only enhances the reliability of circuit components and the overall system stability, but also eliminates the need to limit the driving voltage range during the display driving period. Specifically, it prevents excessive voltage differences that may occur when variable voltages are applied during the touch sensing period, exceeding the voltage stress of the components.

## Claims

1. A signal control circuit (110, 110A, 110B, 110C) applicable to a touch and display driver integration (TDDI) circuit (100), the signal control circuit (110, 110A, 110B, 110C) **characterized by** comprising:
a voltage converter (111) configured to generate a second gate high voltage (VGHO) based on a first gate high voltage (VGH) and generate a second gate low voltage (VGLO) based on a first gate low voltage (VGL);
a first capacitor (C1) coupled between the second gate high voltage (VGHO) and a first node (N1);
a second capacitor (C2) coupled between the second gate low voltage (VGLO) and a second node (N2);
a first switching circuit (112) coupled to the first node (N1) and the second node (N2) and configured to select whether to transmit a reference voltage (VREF) to the second node (N2), and to select whether to couple the first node (N1) to a ground (GND); and
a second switching circuit (113) coupled to the first node (N1) and the second node (N2) and configured to select whether to transmit a time varying signal (VMD) to the first node (N1) and the second node (N2), wherein the time varying signal (VMD) is a periodic signal with a low logic level and a high logic level;
wherein during a touch sensing period, the first switching circuit (112) closes a path coupling the first node (N1) to the ground (GND) and closes a path coupling the second node (N2) to the reference voltage (VREF) at a first time point, the second switching circuit (113) routes the time varying signal (VMD) to the first node (N1) at a second time point and routes the time varying signal (VMD) to the second node (N2) at a third time point where the time varying signal (VMD) changes to the low logic level.

2. The signal control circuit (110, 110A, 110B, 110C) of claim 1, **characterized in that** the first switching circuit (112) comprises:
a first switch (S1) coupled between the first node (N1) and the ground (GND); and
a second switch (S2) coupled between the second node (N2) and the reference voltage (VREF).

3. The signal control circuit (110, 110A, 110B, 110C) of any of claims 1 to 2, **characterized in that** the second switching circuit (113) comprises:
a third switch (S3) coupled between the first node (N1) and the time varying signal (VMD); and
a fourth switch (S4) coupled between the second node (N2) and the time varying signal (VMD).

4. The signal control circuit (110, 110A, 110B) of claim 3, **characterized in that**:
during a display driving period, the first switch (S1) and the second switch (S2) are turned on, while the third switch (S3) and the fourth switch (S4) are turned off; and
during the touch sensing period, the first switch (S1) and the second switch (S2) are turned off at the first time point, the third switch (S3) is turned on at the second time point and the fourth switch (S4) is turned on at the third time point.

5. The signal control circuit (110, 110B) of any of claims 1 to 3, **characterized in that** the first switching circuit (112) further comprises:
a fifth switch (S5) coupled between the second node (N2) and the ground (GND).

6. The signal control circuit (110, 110B) of claim 5, **characterized in that**:
during a display driving period, the first switch (S1) and the fifth switch (S5) are turned on, while the second switch (S2), the third switch (S3) and the fourth switch (S4) are turned off; and
during the touch sensing period, the first switch (S1) and the fifth switch (S5) are turned off at the first time point, the third switch (S3) is turned on at the second time point, the fourth switch (S4) is turned on at the third time point, and the second switch (S2) is turned on for a predetermined time before the third switch (S3) is turned on.

7. The signal control circuit (110, 110B) of claim 6, **characterized in that** the third switch (S3) is turned off at a fourth time point and the fourth switch (S4) is turned off at a fifth time point in response to the touch sensing period being switched to the display driving period.

8. The signal control circuit (110, 110A, 110B) of any of claims 1-7, **characterized by** further comprising:
a third capacitor (C3) coupled between the first gate high voltage (VGH) and the ground (GND); and
a fourth capacitor (C4) coupled between the first gate low voltage (VGL) and the ground (GND).

9. The signal control circuit (110, 110C) of any of claims 1-3, **characterized by** further comprising:
a third capacitor (C3) coupled between the first gate high voltage (VGH) and the first node (N1); and
a fourth capacitor (C4) coupled between the first gate low voltage (VGL) and the second node (N2).

10. The signal control circuit (110, 110C) of any of claims 1-3 and 9, **characterized by** further comprising:
a sixth switch (S6) coupled between the first gate high voltage (VGH) and an external gate high voltage (VGH_IC), wherein the sixth switch (S6) is a P-type MOSFET; and
a seventh switch (S7) coupled between the first gate low voltage (VGL) and an external gate low voltage (VGL_IC), wherein the seventh switch (S7) is an N-type MOSFET.

11. The signal control circuit (110, 110C) of claim 10, **characterized in that**:
during a display driving period, the first switch (S1), the second switch (S2), the sixth switch (S6) and the seventh switch (S7) are turned on, while the third switch (S3) and the fourth switch (S4) are turned off; and
during the touch sensing period, the first switch (S1), the second switch (S2), the sixth switch (S6) and the seventh switch (S7) are turned off at the first time point, the third switch (S3) is turned on at the second time point and the fourth switch (S4) is turned on at the third time point.

12. The signal control circuit (110, 110C) of any of claims 3 and 9-11, **characterized in that** in response to the touch sensing period being switched to the display driving period, the third switch (S3) is turned off at a fourth time point, and the fourth switch (S4) is turned off at a fifth time point.

13. The signal control circuit (110, 110A, 110B, 110C) of any of claims 1 to 12, **characterized in that** the voltage converter (111) further comprises:
a first voltage regulator (111a) configured to convert the first gate high voltage (VGH) to the second gate high voltage (VGHO), wherein the second gate high voltage (VGHO) is lower than the first gate high voltage (VGH); and
a second voltage regulator (111b) configured to convert the first gate low voltage (VGL) to the second gate low voltage (VGLO), wherein the first gate low voltage (VGL) is lower than the second gate low voltage (VGLO).

14. The signal control circuit (110, 110A, 110B, 110C) of any of claims 1 to 13, **characterized in that** the low logic level of the time varying signal (VMD) is equal to the reference voltage (VREF).

15. A touch display system, **characterized by** comprising:
a touch display panel (PL); and
a touch and display driver integration (TDDI) circuit (100), coupled to the touch display panel (PL) and comprising:
a voltage converter (111) configured to generate a second gate high voltage (VGHO) based on a first gate high voltage (VGH) and generate a second gate low voltage (VGLO) based on a first gate low voltage (VGL);
a first capacitor (C1) coupled between the second gate high voltage (VGHO) and a first node (N1);
a second capacitor (C2) coupled between the second gate low voltage (VGLO) and a second node (N2);
a first switching circuit (112) coupled to the first node (N1) and the second node (N2) and configured to select whether to transmit a reference voltage (VREF) to the second node (N2), and to select whether to couple the first node (N1) to a ground (GND); and
a second switching circuit (113) coupled to the first node (N1) and the second node (N2) and configured to select whether to transmit a time varying signal (VMD) to the first node (N1) and the second node (N2), wherein the time varying signal (VMD) is a periodic signal with a low logic level and a high logic level;
wherein during a touch sensing period, the first switching circuit (112) closes a path coupling the first node (N1) to the ground and closes a path coupling the second node (N2) to the reference voltage (VREF) at a first time point, the second switching circuit (113) routes the time varying signal (VMD) to the first node (N1) at a second time point and routes the time varying signal (VMD) to the second node (N2) at a third time point where the time varying signal (VMD) changes to the low logic level.
